# EUROPEAN PATENT APPLICATION

(11) **EP 4 813 807 A1**
(43) Date of publication of application: **30.09.2026**
(21) Application number: 25166770.5
(22) Date of filing: 27.03.2025
(51) Int. Cl.: B62D 15/02

(54) **METHOD FOR OPERATING A HANDS ON/OFF DETECTION SENSOR, HANDS ON/OFF DETECTION SENSOR, AND VEHICLE**

(71) Applicant: Ford Global Technologies, LLC, Dearborn, MI 48126 (US)
(72) Inventor: Bremkens, Jan, 47638 Straelen (DE); Hoersken, Christian, 47447 Moers (DE); Röckner, Fabian, 50739 Köln (DE); Recker, Darrel, Ypsilanti, MI, 48197 (US)
(74) Representative: Markowitz, Markus

(57) **Abstract**

The disclosure generally relates to a method for operating a hands on/off detection sensor (12) of a steering wheel assembly (14), a hands on/off detection sensor (12) of a steering wheel assembly (14), and a vehicle (10) comprising a steering wheel assembly (14) having a hands on/off detection sensor (12). The steering wheel assembly (14) comprises at least a steering column (36), a steering wheel (34) being coupled to the steering column (36), a steering torque sensor (40), a steering wheel angle sensor (38), and an evaluation device (24). At least the steering torque sensor (40) and the steering wheel angle sensor (38) are coupled to the steering column (36). The evaluation device (24) is coupled at least to the steering torque sensor (40) and the steering wheel angle sensor (38). A steering angle of the steering column (36) is detected using the steering wheel angle sensor (38). A maximum hysteresis angle threshold (46) and a minimum hysteresis angle threshold (48) are determined based on an initial steering angle by the evaluation device (24).

## Description

The disclosure generally relates to a method for operating a hands on/off detection sensor of a steering wheel assembly, a hands on/off detection sensor of a steering wheel assembly, and a vehicle comprising a steering wheel assembly having a hands on/off detection sensor.

During semi-autonomous driving, such as when operating advanced driver assistance systems (ADAS) of the vehicle at enhanced levels, the driver has to keep his hands on the steering wheel. In this scenario, the driving system has to check actively that the driver indeed keeps his hands on the steering wheel during operation. This is commonly achieved by a hands on/off detection sensor (HOOD sensor). If the system detects that the driver is driving with hands off the steering wheel, a notification is output reminding the driver to again grab the steering wheel.

According to some approaches, HOOD sensors rely on a readout of electrically conducting mesh structures included within the steering wheel. If the driver grabs the steering wheel, the relative capacitances are altered which enables the manual contact to be detected. However, this scenario is based on a structurally complex steering wheel causing high manufacturing expenses.

According to a different approach, the HOOD detection may be based on a steering torque sensor coupled to a steering column to which the steering wheel is mounted. Whether or not the driver grabs the steering wheel, can be evaluated based on the steering torque detected using the steering torque sensor. In essence, the steering torque applied by the driver's hands to the steering wheel is estimated based on the detected steering torque. The detected steering torque value is compared to a predefined column torque threshold. If the detected steering torque value applied to the steering column is higher than the threshold, the HOOD sensor considers that the driver's hands are in contact with the steering wheel. If the detected steering torque value is below the threshold, the HOOD sensor considers that there is no contact.

Generally, the steering wheel assembly is affected by friction. The friction generates a drag torque when the steering pinion moves. The friction is included within the measured values of the steering torque. Thus, friction also influences the appropriate hands on/off detection. To prevent an unintended hands-on detection, the torque threshold for appropriately confirming a hands-on detection has to be set to a value which is larger than the potential maximum friction-induced steering torque. Therefore, the torque threshold for hands-on detection is calculated by a so-called friction torque stack-up of all upstream steering components.

In other words, this approach is very conservative and leads to a comparatively high torque threshold for hands-on detection. This high torque threshold causes the issue that a "hands-on" scenario may in many cases not be appropriately detected if the driver indeed loosely grabs the steering wheel and therefore causes only a small steering torque below the torque threshold. Accordingly, the comfort for the driver is low since he is notified to contact the steering wheel although he already does so.

CN 115593511 A discloses a method for determining a friction torque exerted inside a steering column of an electric power steering system. The steering column is provided with a torsion bar subjected to an instantaneous torsion moment. A torsion bar sensor is used to measure the instantaneous torsional moment. At least one value of the friction moment is measured by the torsion bar sensor.

JP 2019 189180 A discloses a steering mechanism of a vehicle. A torque sensor detects a torque applied to a first position of the steering shaft. An upper frictional torque is an absolute value of the sensor-detected torque that is caused by a friction force acting on the steering shaft between the first position and the steering wheel when the steering shaft is rotated. A vehicle control system repeatedly estimates the upper friction torque and variably sets a determination threshold at the estimated upper friction torque or more. The vehicle control system determines whether a driver condition is a hands-on condition or a hands-off condition based on a comparison between the absolute value of the sensor-detected torque and the threshold level. JP 2020 117025 A discloses a driving assistance device that controls driving of a steering actuator that applies a steering torque to a steering mechanism to assist a driver's steering operation. A release threshold is considered and set to a value larger than the friction torque such that it is determinable as to whether driver does or does not hold the steering wheel.

The prior art approaches do not consider any appropriate tolerance ranges in view of friction-related thresholds. Hence, the determined thresholds are unnecessarily large for many operating scenarios.

Consequently, there is a need for providing a steering assembly for which a hand contact can be more reliably and appropriately be detected also for ADAS-related driving modes, though varying friction may occur.

The subject matter of the independent claims satisfies the respective need. Further embodiments are indicated within the dependent claims and the following description, each of which, individually or in combination, may represent aspects of the disclosure.

According to an aspect, a method for operating a hands on/off detection (in the following HOOD) sensor of a steering wheel assembly is provided. The steering wheel assembly comprises at least a steering column, a steering wheel being coupled to the steering column, a steering torque sensor, a steering wheel angle sensor, and an evaluation device. At least the steering torque sensor and the steering wheel angle sensor are coupled to the steering column. The evaluation device is coupled at least to the steering torque sensor and the steering wheel angle sensor. The method comprises at least the steps of:
a) A steering angle of the steering column is detected using the steering wheel angle sensor.
b) A maximum hysteresis angle threshold and a minimum hysteresis angle threshold are determined based on an initial steering angle by the evaluation device. The initial steering angle corresponds to the steering angle detected upon initiating a cycle of the method.
c) A steering torque of the steering column is detected using the steering torque sensor until the detected steering angle reached both the maximum hysteresis angle threshold and the minimum hysteresis angle threshold.
d) A maximum torque value and a minimum torque value of the steering column are determined by the evaluation device for the specific cycle of the method based on the detected steering torque.
e) Steps a) to d) are repeated such that multiple maximum torque values and multiple minimum torque values of different cycles of the method are determined.
f) A mean value and a standard deviation for the multiple maximum torque values and for the multiple minimum torque values of the different cycles of the method are determined by the evaluation device, respectively.
g) At least one adapted torque threshold is determined for the HOOD sensor by summing the determined mean value with n times the determined standard deviation by the evaluation device, wherein n is a natural number without zero.

The invention is based on the finding that the conservative constant friction-related torque threshold is conservatively selected too large for many applications. By actively measuring the friction drag torque when the vehicle is operated, a situational dependent adapted torque threshold can be determined which is tailored in view of the situational dependent properties of the specific steering assembly. Therefore, the adapted torque threshold is more precisely adapted to the specific operating scenario. For example, the upstream steering friction of the specific steering wheel assembly can be more precisely considered within the adapted torque threshold. In turn, the method leads to an adapted torque threshold which is not required to comprise a conservative constant broad tolerance region, i.e. a spread, like this is required in case of prior art approaches, where a single tolerance region is taken into account across all steering wheel assemblies, such as assemblies of an entire production cycle.

Since the adapted torque threshold is more appropriately tailored in view of the specific steering wheel assembly, the HOOD sensor can appropriately detect if the driver grabs the steering wheel or not. Thus, the error rate of an erroneous detection of a missing driver's contact with the steering wheel is lowered. Therefore, fewer inappropriate notifications are output for the driver to grab the steering wheel. Hence, the comfort for the driver is enhanced. In addition, the method does not rely on mesh structures incorporated into the steering wheel such that the manufacturing expenses for producing the steering wheel assembly are low.

The minimum hysteresis angle refers not to the absolute value of the hysteresis angle but rather to a directional dependent value. Hence, whereas the maximum hysteresis angle relates to a hysteresis angle along a first rotation direction, the minimum hysteresis angle relates to a hysteresis angle along a second rotation direction which is opposite the first rotation direction.

The minimum torque value refers not to the absolute value of the detected steering torque but rather to a directional dependent value. Hence, whereas the maximum torque value relates to a torque value along a first rotation direction, the minimum torque value relates to a torque value along a second rotation direction which is opposite the first rotation direction.

Preferably, the steering wheel angle sensor transmits the detected steering angle of the steering column to the evaluation device.

In some embodiments, the steering torque sensor transmits the detected steering torque of the steering column to the evaluation device.

The adapted torque threshold may be combined for both the mean value and the standard deviation for the multiple maximum torque values and for the multiple minimum torque values. This means that the adapted torque threshold may be independent of the direction. However, in an alternative, the adapted torque threshold may comprise two direction dependent components individually relating to rotations in opposite senses of rotation.

According to an aspect, the maximum torque and the minimum torque may be determined based on at least one drag pointer logics of the evaluation device. The drag pointer logics may be configured to preserve the maximum torque value and/or the minimum torque value during the variation of the steering angle between the maximum hysteresis angle threshold and the minimum hysteresis angle threshold. The maximum torque value and/or the minimum torque value preserved by the drag pointer logics is exchanged for an updated maximum torque value and/or minimum torque value if an even larger and/or lower torque value is detected during the single specific cycle. In essence, the drag pointer logics is configured to determine the extrema within the detected torque values for each specific cycle. Accordingly, a very convenient and efficient procedure for determining the extrema is implemented such that the operating efficiency is high.

Preferably, the evaluation device may comprise an individual drag pointer logics in view of both the maximum torque value and the minimum torque value. In other words, an individual drag pointer logics is assigned to determine the maximum torque value and a different drag pointer logics is assigned to determine the minimum torque value.

Optionally, the mean value and the standard deviation for the multiple maximum torque values and the multiple minimum torque values of the different cycles of the method are determined applying an online least square filter with limited horizon and outlier detection. Accordingly, the mean value can be efficiently determined in real time. For example, the online least square filter may be an incremental online least square filter based on a linear regression procedure. The outlier detection advantageously allows a continuous enhancement of the precision of the friction-related accuracy of the adapted torque threshold. Therefore, driver caused inputs which cause a torque smaller than the friction of the steering wheel assembly can be more appropriately rejected based on the tailored adapted torque threshold.

According to an aspect the evaluation device can apply the outlier detection of the online least square filter only, once the online least square filter has processed the mean value and the standard deviation for a predetermined number of cycles of the method. The predetermined number of cycles of the method may be chosen such that an initial convergence of the outlier detection is guaranteed before any outliers are rejected. Therefore, inappropriate outlier rejection may be prevented.

Preferably, in case a time period between different operating cycles of the steering wheel assembly is smaller than a predetermined time threshold, the evaluation device applies the outlier detection of the online least square filter immediately after a startup of the steering wheel assembly. The predetermined time threshold may be chosen such that the steering wheel assembly or components thereof are likely not to have been modified, maintained or exchanged within the intermediate time between the subsequent operating cycles of the steering wheel assembly. Here, the term operating cycles does not relate to cycles of the method but to use cycles of the steering wheel assembly. Loosely speaking, different operating cycles occur after the vehicle was stopped, deactivated and activated again (also called key cycles). Since under this condition of the time period being smaller than the threshold time period, the steering wheel assembly was (presumably) not modified, the outlier detection can immediately be applied since no influencing effects need to be considered. In this case, for example previous determined values can be made use of for the outlier detection (as will be explained later on in more detail).

In some embodiments, the evaluation device may determine the maximum hysteresis angle threshold and the minimum hysteresis angle threshold by taking into account a hysteresis angle. The hysteresis angle is determined by dividing a predetermined friction value of an upstream portion of the steering wheel assembly by a stiffness of the upstream portion of the steering wheel assembly.

Preferably, the upstream portion of the steering wheel assembly may include at least one of a steering gear, a steering column, a dash seal, an upper I-shaft, a lower I-shaft, a shaft bearing, a shaft seal, and a clock spring. In essence, the upper portion of the steering wheel assembly may be considered to relate to all components influencing the torque sensed by the steering torque sensor. In view of the upstream portion of the steering wheel assembly, a predetermined value of the friction of this portion may be acquired based on calibration measurements during the manufacturing procedure. For example, the predetermined friction value of the upstream portion may be 0,7 Nm. In this regard, the stiffness of the upstream portion of the steering wheel assembly may exemplarily be 0,6 Nm/deg. Therefore, the hysteresis angle may be determined to be 1,17 deg. The hysteresis angle precisely specifies as to how much the movement of the steering column is to be monitored in order to reliably determine the maximum (friction-related) torque value and the minimum (friction-related) torque value.

According to an aspect, a cycle of the method may be cancelled if a detected steering torque of the steering column exceeds at least one predefined torque threshold of the upstream portion of the steering wheel assembly. In this case, it is concluded that the driver influences the method by applying a torque to the steering wheel. Therefore, this cycle of the method would lead to erroneous values. Hence, the cycle of the method is canceled such that the result of the method is not influenced by external torques applied by the driver.

Optionally, a cycle of the method can be initiated only if the steering wheel assembly is operated according to an autonomous or semi-autonomous driving mode. Hence, the steering wheel assembly is operated without the driver's input. Specifically, when operating the steering wheel assembly according to the autonomous or semi-autonomous driving mode, friction related properties of the steering wheel assembly can be determined which is at least more complex, if not impossible, if an additional torque is applied by the driver.

Preferably, detecting of the steering torque can be initiated only if the detected steering torque of the steering column measured by the steering torque sensor is smaller than a predetermined initiating threshold, preferably if the steering torque is measured to be zero. Therefore, a defined reference point is achieved at the start of a cycle of the method. Accordingly, it can be ensured that the steering torque is between the maximum torque value and the minimum torque value which are to be determined during the cycle of the method. Hence, specific scenarios can be prevented where one of the extrema torque values is not reachable as to the starting properties of the steering wheel assembly.

According to some embodiments, the method may also include the step:
h) The HOOD sensor is operated based on the adapted torque threshold such that a hands contact with the steering wheel is determined to exist if a detected torque of the steering column exceeds the adapted torque threshold.

Since the adapted target threshold is tailored in view of the specific steering wheel assembly and the situational properties thereof, the adapted target threshold more appropriately reflects the border between the internal friction of the steering wheel assembly and the configuration that torque is applied to the steering wheel assembly by an external cause, such as the driver. Consequently, the rate of an erroneous detection of a considered missing contact between the driver's hand and the steering wheel can be lowered in view of the adapted torque threshold. Hence, the rate of erroneous notifications to the driver is reduced such that the comfort for the driver is enlarged.

Optionally, at a startup of the steering wheel assembly, the evaluation device uses a determined mean value and a determined standard deviation determined within a previous execution of the method during a latest use of the steering wheel assembly as initial values within step f) of the method until multiple maximum torque values and multiple minimum torque values are determined according to step e) of the method. Therefore, quick convergence of the method is guaranteed. By using previously determined values, also the outlier detection is appropriate if the steering wheel assembly was not modified within the mean time. Hence, inappropriate values can be immediately excluded.

According to another aspect, the invention also relates to a data processing device comprising means for carrying out the method as described hereinbefore. The advantages achieved in view of the before described method are correspondingly achieved also in view of the data processing device.

According to another aspect, the invention also relates to a computer program product comprising instructions which, when the program is executed by a computer, cause the computer to carry out the method as described hereinbefore. The advantages achieved in view of the before described method are correspondingly achieved also in view of the computer program product.

According to another aspect, the invention also relates to a computer-readable storage medium comprising instructions which, when executed by a computer, cause the computer to carry out the method as described hereinbefore. The advantages achieved in view of the before described method are correspondingly achieved also in view of the computer-readable storage medium.

According to another aspect, a HOOD sensor of a steering wheel assembly is provided. The steering wheel assembly comprises at least a steering column, a steering wheel being coupled to the steering column, a steering torque sensor, a steering wheel angle sensor, and an evaluation device. At least the steering torque sensor and the steering wheel angle sensor are coupled to the steering column. The evaluation device is coupled at least to the steering torque sensor and the steering wheel angle sensor. The steering wheel angle sensor is configured to detect a steering angle of the steering column. The steering torque sensor is configured to detect a steering torque of the steering column until the detected steering angle reached both a maximum hysteresis angle threshold and a minimum hysteresis angle threshold. The evaluation device is configured to:
- determine a maximum hysteresis angle threshold and a minimum hysteresis angle threshold based on an initial steering angle. The initial steering angle corresponds to the steering angle detected upon initiating a control interval of the evaluation device.
- determine a maximum torque value and a minimum torque value of the steering column for each control interval based on the detected steering torque.
- determine a mean value and a standard deviation for multiple maximum torque values and for multiple minimum torque values of the different control intervals, respectively.
- determine an adapted torque threshold for the hands on/off detection sensor by summing the determined mean value with n times the determined standard deviation, wherein n is a natural number without zero.

The advantages reached by the method described herein are also achieved by the HOOD sensor of the steering wheel assembly in a corresponding manner. In particular, a tailored adapted torque threshold is achieved more appropriately reflecting the situational properties of the specific steering wheel assembly.

In some embodiments, the steering wheel assembly may be part of the steer by wire system. However, in other embodiments other typologies of the steering system may be applied, such as an electric power assisted steering.

According to yet another aspect, a vehicle is provided. The vehicle comprises a steering wheel assembly having a HOOD sensor as described herein before. The advantages reached by the HOOD sensor of the steering wheel assembly are also achieved by the vehicle in a corresponding manner.

The forgoing aspects and further advantages of the claimed subject matter will become more readily appreciated as the same become better understood by reference to the following detailed description when taken in conjunction with the accompanying drawings. In the drawings,
- Fig. 1 is a schematical drawing of a vehicle having a HOOD sensor of a steering wheel assembly according to an embodiment,
- Fig. 2 is a schematical drawing of a method for operating a HOOD sensor of a steering wheel assembly according to an embodiment, and
- Fig. 3 is a schematical drawing of a steering torque hysteresis detected within the course of the method.

All of the features disclosed hereinafter with respect to the example embodiments and/or the accompanying figures can alone or in any sub-combination be combined with features of the aspects of the present disclosure including features of preferred embodiments thereof, provided the resulting feature combination is reasonable to a person skilled in the art.

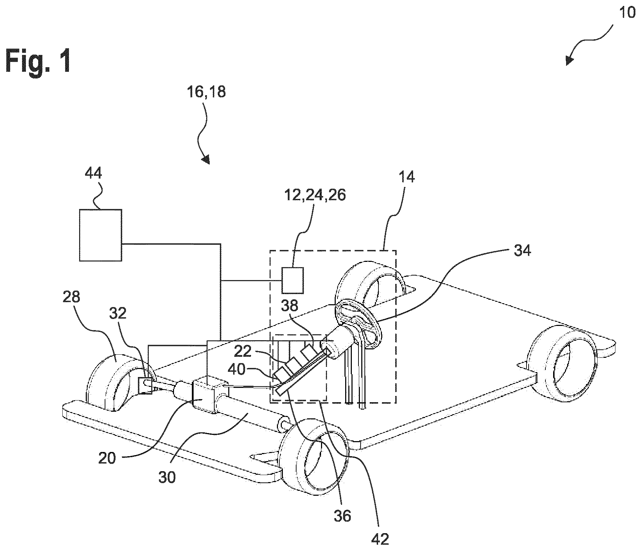

Fig. 1 is a schematical drawing of a vehicle 10 having a HOOD sensor 12 of a steering wheel assembly 14 according to an embodiment.

The steering wheel assembly 14 is part of a steering system 16 which is configured as a steer-by-wire system 18 (in the following named SBW system) in this embodiment. However, the steering wheel assembly 14 is not limited to steering systems 16 with this topology. Other topologies may also be implemented.

In this embodiment, the SBW system 18 includes a roadwheel actuator 20 (in the following named RWA). The SBW system 18 also includes a feedback actuator 22 (in the following named FBA). Moreover, the SBW system 18 comprises an evaluation device 24 which includes the HOOD sensor 12 in this embodiment. The evaluation device 24 is coupled to the RWA 20 and the FBA 22. Moreover, in this embodiment, the evaluation device 24 is part of a control device 26 of the SBW system 18. In an alternative, the evaluation device 24 could also be part of the steering wheel assembly 14 and separate from the RWA 20.

The evaluation device 24 comprises sophisticated evaluation topologies, such as drag pointer logics and an online least square filter with limited horizon and outlier detection. The drag pointer logics are applicable to identify extrema values within received measurement data. The online least square filter with limited horizon and outlier detection is applicable to efficiently determine a mean value and a standard deviation within a collection of received measurement values.

The RWA 20 and the FBA 22 are coupled to one another and to the control device 26.

In this embodiment, the RWA 20 is indirectly coupled to steerable roadwheels 28 of the vehicle 10. For this purpose, the RWA 20 has an electric motor, which is coupled to a rack 30, according to the present embodiment. The RWA 20 can output a torque using the electric motor to vary a position of the rack 30 along the rack path.

The rack 30 is coupled to the steerable roadwheels 28 of the vehicle 10. Displacement of the rack 30 with respect to a reference position, such as a neutral position, results in a change in orientation of the steerable roadwheels 28 about the steering axes of the respective roadwheels 28.

The operation of the steerable roadwheels 28 is controlled via the roadwheel angle sensed by a roadwheel angle sensor 32 assigned to at least one steerable roadwheel. The roadwheel angle sensor 32 is coupled to the control device 26. In an alternative to the roadwheel angle sensor 32, the position of the rack 30 or an angle of a gear pinion at least indirectly coupled to the RWA 20 may be sensed and transmitted to the control device 26.

The SBW system 18 also has a steering wheel 34. The steering wheel 34 is coupled to a steering column 36, to which the FBA 22 is also coupled at least indirectly. The FBA 22 is configured to exert a torque on the steering column 36 which in turn (in absence of other torques) leads to a rotation of the steering wheel 34.

This way, the driver of the vehicle 10 is provided with a feel of the lateral guidance of the vehicle 10.

The driver of the vehicle 10 can generally execute steering commands for the vehicle 10 via the steering wheel 34.

The SBW system 18 further comprises at least one steering wheel angle sensor 38 configured to detect a steering wheel angle, i.e., a steering wheel position, of the steering wheel 34 via the steering column 36. That means that the steering wheel angle sensor 38 is at least indirectly coupled with the steering column 36 and also configured to transmit the detected steering angle to the evaluation device 24.

Moreover, the SBW system 18 comprises at least one steering torque sensor 40. In this case, the steering torque sensor 40 is also coupled to the steering column 36. The steering torque sensor 40 is configured to detect a torque in view of the steering column 36 and to transmit the detected torque to the evaluation device 24.

The torque sensed by the steering torque sensor 40 may at least partially be caused by a driver's input if the driver grabs the steering wheel 34 and applies a torque. Moreover, the torque detected by the steering torque sensor 40 may at least partially also be caused by friction occurring due to the structural coupling between the internal components of the steering wheel assembly 14. In particular, the steering wheel assembly 14 comprises a so-called upstream portion 42 which components may cause friction that is detectable by the steering torque sensor 40.

According to this embodiment, the upstream portion 42 of the steering wheel assembly 14 includes at least one of a steering gear, a steering column, a dash seal, an upper I-shaft, a lower I-shaft, a shaft bearing, a shaft seal, and a clock spring. Furthermore, the upstream portion 42 may also comprise additional components.

The FBA 22 also includes an electric motor. By means of the electric motor, the FBA 22 can exert a torque on the steering column 36, by which the steering wheel angle and/or the steering wheel speed is influenced, for example based on a control signal from the control device 26.

A current steering configuration including a current steering wheel angle generally corresponds to a specific current roadwheel target angle, according to which the steerable roadwheels 28 are to be aligned. Since the roadwheels 28 are coupled to the rack 30 at least indirectly, a steering command is equivalent to a specific steering rack position of the rack 30. In other words, a steering wheel angle corresponds to a position according to which the rack 30 is to be moved in order to achieve a desired orientation of the roadwheels 28.

The driver can dynamically change the current steering command by changing the steering wheel position, which in turn dynamically changes the roadwheel angle. In addition, based on the orientation of the steerable roadwheels 28 or based on the rack position of the rack 30 or based on an angle/position of the gear pinion coupled to the RWA 20, a feedback torque is determined by the control device 26 that is to be applied by the FBA 22 to the steering column 36. Based on the feedback torque, the driver should be given a feeling for the lateral control of the vehicle 10.

According to this embodiment, the vehicle 10 includes a driving control device 44. The driving control device 44 is configured to execute autonomous or semi-autonomous driving modes, such as according to higher ADAS levels. For example, the driving control device 44 can autonomously influence the lateral control of the vehicle 10 in this way. To do this, the driving control device 44 can, for example, set a default for the steering wheel angle, the steering wheel travel or a corresponding parameter, which is subsequently set accordingly by the control device 26 and/or the FBA 22 of the SBW system 18. The steering wheel angle subsequently set is detected by the steering wheel angle sensor 38 and transmitted to the evaluation device 24, and/or the control device 26, and/or the RWA 20 or it is transmitted directly from the driving control device 44 to the control device 26 and/or the RWA 20. The driving control device 44 may also receive measurement data from the various sensors, such as the roadwheel angle sensor 32, the steering wheel angle sensor 38, the HOOD sensor 12, and/or optional environment sensors which are configured to detect a surrounding of the vehicle 10 for adapting the autonomous or semi-autonomous driving modes.

Here, the SBW system 18 is shown as front axle steering. The vehicle 10 and the SBW system 18 may optionally also have further steerable roadwheels 28, for example rear wheels, which are coupled to an additional common or separate RWAs 20.

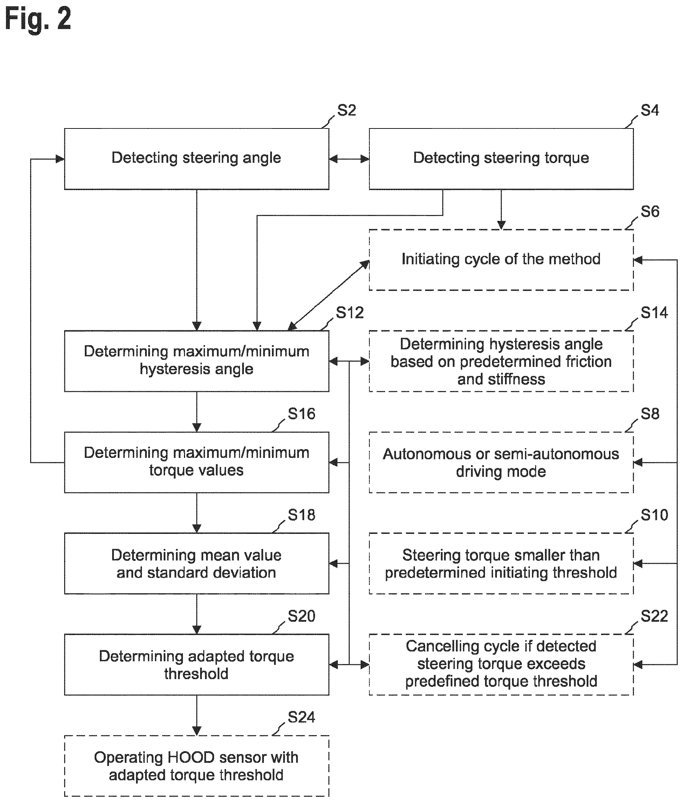

Fig. 2 is a schematical drawing of a method for operating a HOOD sensor 12 of a steering wheel 34 assembly according to an embodiment. Optional steps are shown in dashed lines.

In step S2, a steering angle of the steering column 36 is detected using the steering wheel angle sensor 38. The detected values are transmitted to the evaluation device 24.

Step S4 is simultaneously executed with step S2. In step S2, a steering torque of the steering column 36 is detected using the steering torque sensor 40. The detected values of the steering torque are transmitted to the evaluation device 24.

The steering angle and the steering torque are generally detected at all times as soon as the steering system 16 is active.

In optional step S6, a cycle of the method may be initiated which depends on specific conditions according to this embodiment.

Optional step S6 may be modified by optional step S8. In optional step S8 it is evaluated whether the steering wheel assembly 14 is operated according to an autonomous or semi-autonomous driving mode. To this end, the evaluation device 24 may communicate with the driving control device 44. If the driving control device 44 is in charge of the steering of the vehicle 10, the steering wheel assembly 14 is operated according to a required driving mode. Within the autonomous or semi-autonomic driving mode, inputs by the driver are omitted, such that no torque is applied by the driver to the steering wheel 34. In this scenario, the friction related properties of the steering wheel assembly 14 can be evaluated in order to determine an adapted torque threshold.

Optional step S6 may also be modified by optional step S10. In optional step S10, the evaluation device 24 assesses if the torque sensed by the steering torque sensor 40 is smaller than a predetermined initiating threshold. Also, it may be assessed if the detected steering torque is substantially zero, i.e. if it is so small that it is negligible. This condition ensures that the torque detected in view of the steering column 36 can be used as a reference for downstream steps of the method.

After a cycle of the method is initiated, the method comprises step S12 in which a maximum hysteresis angle threshold and a minimum hysteresis angle threshold are determined by the evaluation device 24 based on an initial steering angle. The initial steering angle corresponds to the steering angle detected upon initiating a cycle of the method. This means that the initial steering angle detected by the steering angle sensor 38 is used as reference based on which the minimum hysteresis angle threshold and the maximum hysteresis angle threshold are determined.

Step S12 may be modified by optional step S14. in this case, the evaluation device 24 takes into account a hysteresis angle for determining the maximum/minimum hysteresis angle threshold. Accordingly, if the initial steering angle is denoted by alpha_initial, the maximum/minimum hysteresis angle threshold alpha_hys_max/alpha_hys_min may be determined by the evaluation device 24 as: alpha_hys_max/alpha_hys_min = alpha_initial ± alpha_hys. The hysteresis angle alpha_hys is determined by the evaluation device 24 by dividing a predetermined friction value of the upstream portion 42 of the steering wheel assembly 14 by a stiffness of the upstream portion 42 of the steering wheel assembly 14. Both the predetermined friction value of the upstream portion 42 and the stiffness of the upstream portion 42 can be determined during the manufacturing procedure and/or during the design phase. Therefore, threshold values are achieved which specify as to how much the steering column 36 needs to be rotated in order to determine the friction properties of the upstream portion 42 of the steering wheel assembly 14.

In subsequent step S16 of the method, a maximum torque value and a minimum torque value of the steering column 36 are determined by the evaluation device 24 for the specific cycle of the method. To this end, the steering torque applied to the steering column 36 is detected by the steering torque sensor 40 until the detected steering angle (measured by the steering wheel angle sensor 38) reached both the maximum hysteresis angle threshold and the minimum hysteresis angle threshold. In this regard, according to the present embodiment, a drag pointer logics of the evaluation device 24 is applied in order to assess the received values of the detected steering torque of this respective cycle. The drag pointer logics identifies within the group of detected steering torques of the cycle of the method the maximum torque value and the minimum torque value.

At least steps S2, S4, S12, and S16 are repeated several times such that collections of maximum torque values and minimum torque values for multiple different cycles are achieved. Optionally, each individual cycle may rely on specific initiating conditions as was explained in view of optional step S6.

Subsequently, in step S18 of the method, a mean value and a standard deviation for the multiple maximum torque values and for the multiple minimum torque values of the different cycles of the method are determined by the evaluation device 24, respectively. In this regard, the evaluation device 24 may apply the online least square filter with limited horizon and outlier detection. As to the outlier detection, a continuous enhancement of the precision of the friction-related accuracy may be achieved as the mean value and the standard deviation can be narrowed down after the outliers are excluded.

Optionally, the evaluation device (24) applies the outlier detection of the online least square filter in step S18 only, once the online least square filter has processed the mean value and the standard deviation for a predetermined number of cycles of the method.

Step S18 may also be modified in that the evaluation device (24) applies the outlier detection of the online least square filter immediately after a startup of the steering wheel assembly (14), in case a time period between different operating cycles of the steering wheel assembly (14) is smaller than a predetermined time threshold.

If the steering wheel assembly (14) is just startup, step S18 may also comprise that the evaluation device (24) uses a determined mean value and a determined standard deviation determined within a previous execution of the method during a latest use of the steering wheel assembly (14) as initial values within step S18 of the method until multiple maximum torque values (50) and multiple minimum torque values (52) are determined according to repeated steps S16 of the method.

In following step S20 the evaluation device 24 determines an adapted torque threshold for the HOOD sensor 12 by summing the determined mean value with n times the determined standard deviation. N is a natural number without zero.

Accordingly, the adapted torque threshold for the HOOD sensor 12 is not constant anymore independent of the situational properties of the steering system 16. In contrast, the method enables a situational torque threshold to be determined. Consequently, the adapted torque threshold also appropriately takes into account operating effects such as wear or reduced smearing. In essence, the adapted torque threshold is tailored in view of the current properties of the steering wheel assembly 14 such that the tolerance ranges can be narrowed. In effect, the hands on/off detection of the HOOD sensor 12 is enabled to be more appropriate and more reliable.

The method may comprise optional step S22 according to which a cycle of the method is cancelled if the evaluation device 24 determines that the detected steering torque of the steering column 36 exceeds at least one predefined torque threshold of the upstream portion 42 of the steering wheel assembly 14. The predefined torque threshold is chosen in view of the properties of the upstream portion 42 of the steering wheel assembly 14. In this case, it is considered that the driver of the vehicle 10 applies a torque onto the steering wheel 34 thereby influencing the method.

Moreover, the method may comprise optional step S24, in which the adapted torque threshold is applied in view of the HOOD sensor 12. Accordingly, a hands contact with the steering wheel 34 is determined to exist if a detected torque of the steering column 36 exceeds the adapted torque threshold. As to the adapted torque threshold, the determination of the HOOD sensor 12 is more reliable and appropriate in view of the properties of the specific steering wheel assembly 14.

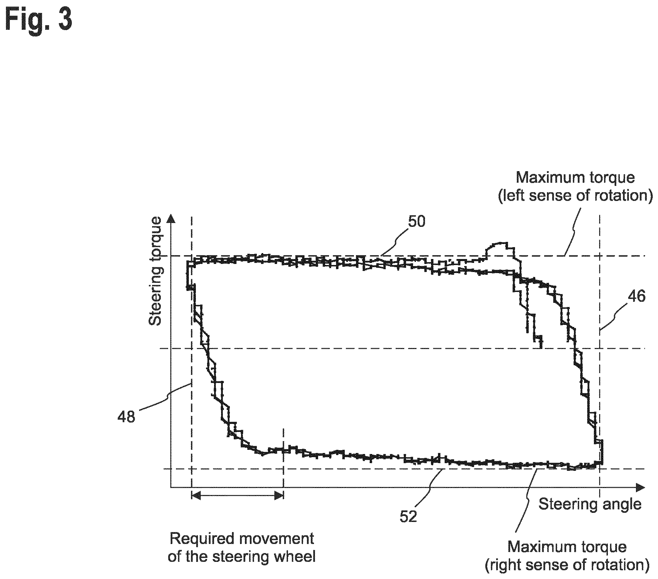

Fig. 3 is a schematical drawing of a steering torque hysteresis detected within the course of the method.

On the y-axis the steering torque is depicted relative to the steering angle on the x-axis. The steering torque of the steering column 36 has to be monitored until the steering angle reached both the maximum hysteresis angle threshold 46 and the minimum hysteresis angle threshold 48.

During the movement of the steering angle between the maximum hysteresis angle threshold 46 and the minimum hysteresis angle threshold 48, a single or multiple drag pointer logics of the evaluation device 24 is/are used to determine the maximum torque value 50 and the minimum torque value 52 until the steering angle reached both the maximum hysteresis angle threshold 46 and the minimum hysteresis angle threshold 48. This way, an appropriate basis for determining the mean value and the standard deviation for the multiple maximum torque values 50 and the multiple minimum torque values 52 is achieved. This in turn enables the adapted torque threshold to be precisely determined.

## Claims

1. A method for operating a hands on/off detection sensor (12) of a steering wheel assembly (14), the steering wheel assembly (14) comprising at least a steering column (36), a steering wheel (34) being coupled to the steering column (36), a steering torque sensor (40), a steering wheel angle sensor (38), and an evaluation device (24), wherein at least the steering torque sensor (40) and the steering wheel angle sensor (38) are coupled to the steering column (36), and wherein the evaluation device (24) is coupled at least to the steering torque sensor (40) and the steering wheel angle sensor (38), the method comprising at least the steps of:
a) Detecting a steering angle of the steering column (36) using the steering wheel angle sensor (38),
b) Determining a maximum hysteresis angle threshold (46) and a minimum hysteresis angle threshold (48) based on an initial steering angle by the evaluation device (24), wherein the initial steering angle corresponds to the steering angle detected upon initiating a cycle of the method,
c) Detecting a steering torque of the steering column (36) using the steering torque sensor (40) until the detected steering angle reached both the maximum hysteresis angle threshold (46) and the minimum hysteresis angle threshold (48),
d) Determining a maximum torque value (50) and a minimum torque value (52) of the steering column (36) by the evaluation device (24) for the specific cycle of the method based on the detected steering torque,
e) Repeating steps a) to d) such that multiple maximum torque values (50) and multiple minimum torque values (52) of different cycles of the method are determined,
f) Determining a mean value and a standard deviation for the multiple maximum torque values (50) and for the multiple minimum torque values (52) of the different cycles of the method by the evaluation device (24), respectively, and
g) Determining at least one adapted torque threshold for the hands on/off detection sensor (12) by summing the determined mean value with n times the determined standard deviation by the evaluation device (24), wherein n is a natural number without zero.

2. The method of claim 1, wherein the maximum torque and the minimum torque are determined based on at least one drag pointer logics of the evaluation device (24).

3. The method of claim 1 or 2, wherein the mean value and the standard deviation for the multiple maximum torque values and the multiple minimum torque values of the different cycles of the method are determined applying an online least square filter with limited horizon and outlier detection.

4. The method of claim 3, wherein the evaluation device (24) applies the outlier detection of the online least square filter only, once the online least square filter has processed the mean value and the standard deviation for a predetermined number of cycles of the method.

5. The method of claim 3 or 4, wherein, in case a time period between different operating cycles of the steering wheel assembly (14) is smaller than a predetermined time threshold, the evaluation device (24) applies the outlier detection of the online least square filter immediately after a startup of the steering wheel assembly (14).

6. The method of any one of the preceding claims, wherein the evaluation device (24) determines the maximum hysteresis angle threshold (46) and the minimum hysteresis angle threshold (48) by taking into account a hysteresis angle, wherein the hysteresis angle is determined by dividing a predetermined friction value of an upstream portion (42) of the steering wheel assembly (14) by a stiffness of the upstream portion of the steering wheel assembly (14).

7. The method claim 6, wherein a cycle of the method is cancelled if a detected steering torque of the steering column (36) exceeds at least one predefined torque threshold of the upstream portion (42) of the steering wheel assembly (14).

8. The method of any one of the preceding claims, wherein a cycle of the method can be initiated only if the steering wheel assembly (14) is operated according to an autonomous or semi-autonomous driving mode.

9. The method of any one of the preceding claims, wherein detecting of the steering torque can be initiated only if the detected steering torque of the steering column (36) measured by the steering torque sensor (40) is smaller than a predetermined initiating threshold.

10. The method of any one of the preceding claims, wherein the method also includes:
h) Operating the hands on/off detection sensor (12) based on the adapted torque threshold such that a hands contact with the steering wheel (34) is determined to exist if a detected torque of the steering column (36) exceeds the adapted torque threshold.

11. The method of any one of the preceding claims, wherein, at a startup of the steering wheel assembly (14), the evaluation device (24) uses a determined mean value and a determined standard deviation determined within a previous execution of the method during a latest use of the steering wheel assembly (14) as initial values within step f) of the method until multiple maximum torque values (50) and multiple minimum torque values (52) are determined according to step e) of the method.

12. A hands on/off detection sensor (12) of a steering wheel assembly (14), the steering wheel assembly (14) comprising at least a steering column (36), a steering wheel (34) being coupled to the steering column (36), a steering torque sensor (40), a steering wheel angle sensor (38), and an evaluation device (24), wherein at least the steering torque sensor (40) and the steering wheel angle sensor (38) are coupled to the steering column (36), and wherein the evaluation device (24) is coupled at least to the steering torque sensor (40) and the steering wheel angle sensor (38),
wherein the steering wheel angle sensor (38) is configured to detect a steering angle of the steering column (36),
wherein the steering torque sensor (40) is configured to detect a steering torque of the steering column (36) until the detected steering angle reached both a maximum hysteresis angle threshold (46) and a minimum hysteresis angle threshold (48), and
wherein the evaluation device (24) is configured to:
- determine the maximum hysteresis angle threshold (46) and the minimum hysteresis angle threshold (48) based on an initial steering angle, wherein the initial steering angle corresponds to the steering angle detected upon initiating a control interval of the evaluation device (24),
- determine a maximum torque value (50) and a minimum torque value (52) of the steering column (36) for each control interval based on the detected steering torque,
- determine a mean value and a standard deviation for multiple maximum torque values (50) and for multiple minimum torque values (52) of the different control intervals, respectively, and
- determine an adapted torque threshold for the hands on/off detection sensor (12) by summing the determined mean value with n times the determined standard deviation, wherein n is a natural number without zero.

13. Vehicle (10) comprising a steering wheel assembly (14) having a hands on/off detection sensor (12) according to claim 12.
